# EUROPEAN PATENT APPLICATION

(11) **EP 2 136 157 A2**
(43) Date of publication of application: **23.12.2009**
(21) Application number: 09007590.4
(22) Date of filing: 09.06.2009
(51) Int. Cl.: F24J 3/08

(54) **Tube assembly for geothermal heat exchanger**

(30) Priority: 16.06.2008 NL 1035587
(71) Applicant: Demar Heiwerken B.V., 3411 MJ Lopik (NL)
(72) Inventor: Lehmann, Reijer, Willem, 3411 MJ Lopik (NL); Lehmann, Jacob, 3411 MJ Lopik (NL)
(74) Representative: Ferguson, Alexander

(57) **Abstract**

Tube assembly (8) for a heat exchanger (3) active in the ground, comprising a first tube (9) having an axis (S), which tube (9) forms a first passage (11) for a heat exchanger fluid flowing therethrough, and a second tube (10) having an axis (S), wherein the first tube (9) while forming an annular space (12), which forms a second passage for the heat exchanger fluid flowing therethrough, is accommodated in an axial-parallel manner in the second tube (10), preferably in a concentric manner, wherein the annular space (12) is provided with first spacers for keeping the first tube (9) and the second tube (10) spaced apart from each other all round, wherein the first spacers are provided with directing means for subjecting the fluid flow in the annular space (12) to a tangential flow directional component, wherein the directing means form a helical flow guidance surface with respect to the axis (S) of the first tube (9), wherein at radial distance from the first tube (9), at or near the inner surface of the second tube (10) turbulence increasing means for the fluid flow are arranged.

## Description

### BACKGROUND OF THE INVENTION

The invention relates to a heat exchanger to be incorporated in a bottom. The invention furthermore relates to a heat pumping plant having such a heat exchanger. The invention further relates to a building, such as a house, office building, factory, greenhouse or hothouse, provided with such a heat pumping plant.

Heat exchangers to be incorporated in a bottom are known in many embodiments. An example is described in international patent application WO 00/36343, in which in a bore hole that is over 50 meters deep, a free inner pipe enveloped by a hose of insulation material, is lowered, as well a casing built up from vertical channels. At the lower end the channels merge via a manifold into a smaller number of connecting channels that are connected to the lower end of the inner pipe. The space between the casing and the inner pipe is filled with ground water.

In another known embodiment an assembly built up from two HDPE pipes/tubes that are placed against each other and are connected to each other is lowered into a bore hole, which pipes/tubes at the lower end merge into each other into an end piece, so that a kind of loop is formed. In an alternative embodiment shown in GB-A-2.443.954, the lower end of the assembly is urged into the bottom simultaneously with a drill head.

Due to traversing cold soil layers geothermal heat exchangers usually are filled with a glycol-containing liquid. The longer the line, the greater the risk of leakage, particularly where there are couplings. Leakage of glycol may be disadvantageous in layers the ground water of which is intended to be drinking water. The thermal influence on ground water intended to be drinking water may also be undesirable. In case of long lines, which also require a high pumping capacity, a mutual thermal influence may furthermore become important, especially when both lines are situated right next to each other, as a result of which the efficiency is affected negatively. A further drawback of long lines is that the introduction into the bottom requires corresponding effort and time.

### ABSTRACT OF THE INVENTION

It is an object of the invention to provide a geothermal heat exchanger, with which increased efficiency can be achieved.

It is an object of the invention to provide a geothermal heat exchanger, with which adversely influencing the surroundings in the bottom can be limited.

It is an object of the invention to provide a geothermal heat exchanger, of which the length can be kept limited while retaining or increasing efficiency.

It is an object of the invention to provide a geothermal heat exchanger that can be installed in a bottom within a short period of time.

At least one of these objects can be achieved according to the invention using a tube assembly for a heat exchanger active in the ground, comprising a first tube having an axis, which tube forms a first passage for a heat exchanger fluid flowing therethrough, particularly a liquid, particularly water, and a second tube having an axis, wherein the first tube while forming an annular space, which forms a second passage for the heat exchanger fluid flowing therethrough, is accommodated in an axial-parallel manner in the second tube, preferably in a concentric manner, wherein the annular space is provided with first spacers for keeping the first tube and the second tube spaced apart from each other all round, wherein the first spacers are provided with directing means for subjecting the fluid flow in the annular space to a tangential flow directional component, wherein the directing means form a helical flow guidance surface with respect to the axis of the first tube, wherein at radial outward distance from the first tube, at or near the inner surface of the second tube, turbulence increasing means for the fluid flow are arranged, preferably in the form of holes in surfaces contacting the flowing fluid.

In such a tube assembly the position of the first tube is fixed with respect to the second tube and in an arrangement as heat exchanger in a ground thus with respect to the ground, and over the length of the tubes it will correspond with the design, so that the achievements of the heat exchanger can be reliable. In case of a concentric position of both tubes, usually the thermal transfer will be substantially equally distributed all round. The helical first spacers moreover make the tube assembly rigid so that it can be introduced into a bottom more easily and more reliably and they ensure an extended flow path as a result of which the contact time of the fluid with the second tube is extended, and thus the duration of thermal transfer is increased. As a result thereof the overall length of the tube assembly can remain limited and the installation can be limited down to a smaller depth. In that way deep (drinking) water guiding layers can remain out of the sphere of influence. Moreover because of the support given to the second tube by the spacers, the second tube can be designed with a thinner wall, as a result of which with the same outer diameter the second passage can be enlarged, as a result of which the rate of flow therein can be lower and thus the length of stay longer. The turbulence increasing means, which have particularly been arranged regularly distributed over the length and circumference of the tube assembly, particularly in the form of holes in surfaces that limit the flow path in an area at or near the second tube, counteract the formation of a laminar boundary layer at the second tube and then ensure increase of the degree of turbulence, as a result of which the efficiency of the heat exchange through the second tube is further increased and the length and/or diameter of the tube assembly can remain limited. Between the holes and the first tube the flow guidance surface is uninterrupted, so that the flow there is enhanced and the contacting time with the first tube remains limited. This is even further improved when the surface of the first tube bounding the annular space and the flow guidance surface is smooth.

When the turbulence increasing means are formed like holes, they preferably are through-holes in order to form passages for the flowing fluid from the upstream side of the spacer to its downstream side, so that a series of second flow paths is provided, which further increases the degree of turbulence. The holes preferably are formed like grooves. The holes preferably extend parallel to the axes of both tubes.

In one advantageous embodiment there are several, individual passages, situated distributed. When the passages are formed in the spacers the manufacturing of the tube assembly is made easier.

The first tube can be provided with a means for thermal insulation of both passages with respect to each other. In one embodiment the first tube has double walls for that purpose in order to form an intermediate annular space, filled with gas (air) or with an insulation material, wherein spacers are present between both walls. Such an annular air chamber preferably is closed at its upper end. When the air in the intermediate annular space has absorbed heat from the fluid during its downward flow through the annular space, said heat can at least partially be transferred to the rising fluid in the inner tube, particularly in an upper part thereof.

Alternatively the first tube comprises an inner casing of synthetic foamed material on which the spacers are located. In one embodiment that is easy to manufacture the first spacers are integrally formed with the inner casing, preferably of the same material, preferably by extrusion. The helical shape is then acquired by rotating the extrusion head.

The flow in the first passage and the strength are enhanced when the inner casing is arranged around an inner tube of substantially solid material, preferably by extrusion.

In order to facilitate the shortening of the inner casing, which may be necessary at the lower end of the heat exchanger, the inner tube at the outer surface can be provided with a coating for lowering the adhesive force between the inner tube and the inner casing.

In a further development of the tube assembly according to the invention, considered in a plane of longitudinal section containing the tube axes, the flow guidance surface descends towards the second tube. In that way the fluid is urged to the second tube where the turbulence increasing means are situated.

In one embodiment thereof, wherein the spacers on either side define a flow guidance surface, both surfaces one to the other converge radially to the outside with an opposite sign. The tube assembly can then be used in the same orientation in a system having opposite flow: in both cases the fluid is urged outward. This also has advantages as regards assembly of several consecutive lengths of tubes, as in that case the orientation need not be of importance.

In one embodiment the spacers in their cross-section (that means a cross-section on the spacer, coinciding with an axial plane of cross-section of the tube assembly) have a radial inner side situated at the first tube and a radial outer side situated at the second tube, wherein the radial inner side has a larger length than the radial outer side, wherein the spacers preferably are trapezoidal in cross-section. A consequence thereof is that the contact surface with the first tube is made smaller. Moreover it may improve the supportive action of the spacers for the second tube.

In one embodiment the tube assembly near the upper end thereof is provided with means for heating the fluid flowing out or flowing in, so that a post-heating is given before it reaches a heat pump or an additional or preheating when a greater quantity of heat is wanted to be transferred to the ground (for instance to counteract it getting frozen or for enhancing decomposition processes of waste and/or pollutions). The heating means can be placed for heating the fluid flowing through the first tube. They may comprise an envelope of the first tube, which can be electrically activated. The envelope may for that purpose comprise two electrodes, connected to an external power supply, such as a power supply based on wind or solar energy.

When the second tube, considered in longitudinal direction of the tube, has been built up from lengths of different material having different coefficients of heat conduction, the heat exchanger can be adapted to the surrounding soil type. For instance a water-containing sand layer will be able to absorb heat more quickly than a clay layer. The portion of the second tube extending through the sand layer can then be of metal, having a high coefficient of heat conduction, whereas the portion extending through a clay layer can be of synthetic material, such as HDPE, having a lower coefficient of heat conduction. The consecutive lengths can be attached to each other with suitable means, for instance by insertion connections, optionally supplemented by an adhesive.

Thus the invention according to a further aspect provides a tube assembly for a heat exchanger active in the ground, comprising a first tube and a second tube, wherein the first tube while forming an annular space intended for heat exchanger fluid flowing through, is accommodated in the second tube, wherein the first tube is adapted for said fluid flowing through, wherein the second tube considered in longitudinal direction of the tube has been built up from lengths of different material having different coefficients of heat conduction, which lengths are either intended or placed for thermal transfer during use between the annular space and the ground.

According to a further aspect the invention provides a tube, particularly for a tube assembly according to the invention, comprising an inner tube, of substantially solid material and a casing arranged around it of synthetic foamed material, wherein the casing at the outer side is provided with at least one helical rib of synthetic foamed material, preferably of the same material as the casing's material, wherein, preferably, the casing is arranged on the inner tube so as to fit snugly, preferably by extrusion, preferably while applying an anti-adhesive between the inner tube and the casing.

Such a tube is suitable as first tube in a tube assembly according to the invention. In one embodiment the tube is accommodated in an outer tube which in circumferential sense is supported by the rib. Depending on the length of the tube several tubes can be connected to each other in longitudinal direction into a tube assembly of the desired length.

According to a further aspect the invention provides a method for manufacturing a tube assembly comprising an inner tube of substantially solid material and situated thereon a casing of synthetic foamed material, wherein the casing is extruded on the inner tube, wherein the casing is provided with a helical rib, wherein the rib is preferably made of synthetic foamed material, preferably of material equalling the casing's material, wherein, preferably, the casing and the rib are formed simultaneously, wherein, preferably, the rib is made having a trapezoidal cross-section, preferably having side surfaces that incline with respect to a radial surface at that location, preferably having an opposite sign. Preferably throughgoing recesses, preferably grooves, extending in tube direction are made in the radial outer side of the rib.

The assembly of inner tube and casing arranged thereon thus achieved can be inserted into an outer tube, preferably in a snugly fitting manner. The impressionability of the ribs makes it possible that they press against the inner surface of the outer tube, thus ensuring a proper abutment.

The invention further provides an arrangement of at least one tube assembly according to the invention, arranged in a bottom, wherein the tube assembly extends in the bottom, wherein the tube assembly at the end is provided with a closure, having a space in which the annular space is in fluid connection with the inside of the first tube, wherein the tube assembly at the opposite end is connected to a thermal converter while creating a cycle in which the inside of the first tube and the annular space are included. In one embodiment the thermal converter is formed by a heat source, particularly in an arrangement for heating the bottom, for instance of airports, sports fields or for the said improvement of cleansing processes in the bottom.

The invention furthermore provides a building on a bottom, provided with at least one tube assembly according to the invention arranged in the bottom, wherein the tube assembly extends in the bottom, in one embodiment down to a depth below the building, wherein the tube assembly at the end is provided with a closure, having a space in which the annular space is in fluid connection with the inside of the first tube, wherein the tube assembly at the opposite end is connected to a thermal converter while creating a cycle in which the inside of the first tube and the annular space are included. The building may for instance be a house, business premises, factory hall, greenhouse or hothouse with a series of tube assemblies placed in the bottom spaced apart from each other.

The said (synthetic) foamed material preferably is a foamed material of closed cells. The cell walls of the closed cells increase the strength, advantageous to the support of the second or outer tube, and the closed cell volumes increase the insulating value. The surface of the foamed material contacted by the fluid, at least the part thereof that is radially spaced from the outer tube, preferably is made smooth in order to improve the rate of flow along it. In addition it may opted for to leave the radial outer edge areas untreated in that respect, for some roughness, to improve a turbulent flow near the outer tube.

It is noted that from EP-A-1.486.741 a tube assembly is known for a geothermal heat exchanger, wherein an inner tube is provided with an insulation casing and with it extends within a helical collector tube with which the inner tube forms a cycle. The collector tube is spaced apart from a metal casing that is placed in a bore hole. In a lowermost area the inner tube has a thickened wall and it is surrounded by a heat conducting moulding material, in which also the collector tube is surrounded.

JP-A-2007-139370 shows a tube assembly for a geothermal heat exchanger having an inner tube enveloped by an insulation casing and having an outer tube situated concentrically around it.

The aspects and features described in this description and the claims of the application and/or shown in the drawings of this application may where possible also be used individually. Said individual aspects may be the subject of divisional patent applications relating thereto. This particularly applies to the features and aspects that are described per se in the sub claims.

### BRIEF DESCRIPTION OF THE DRAWINGS

The invention will be elucidated on the basis of a number of exemplary embodiments shown in the attached drawings, in which:
Figure 1 shows a schematic view of an arrangement including a greenhouse and a first exemplary embodiment of a tube assembly according to the invention;
Figure 1A shows a schematic view of a distribution box that can be used in the arrangement of figure 1;
Figure 2 shows a schematic view of an arrangement including a greenhouse and a second exemplary embodiment of a tube assembly according to the invention;
Figures 3A and 3B show a longitudinal section of the lower end of the tube assembly of figure 1 and a cross-section according to the plane IIIB, respectively;
Figures 4A and 4B show a longitudinal section of the lower end of a third exemplary embodiment of a tube assembly according to the invention and a cross-section according to the plane IVB, respectively;
Figures 5A and 5B show a longitudinal section of the lower end of a fourth exemplary embodiment of a tube assembly according to the invention and a cross-section according to the plane VB, respectively;
Figure 6 shows an example of an arrangement for making another exemplary embodiment of a tube assembly according to the invention; and
Figures 7A and 7B show a side view of an insulation casing with rib for a tube assembly manufactured with the arrangement of figure 6 and such a tube assembly, in cross-section, respectively.

### DETAILED DESCRIPTION OF THE DRAWINGS

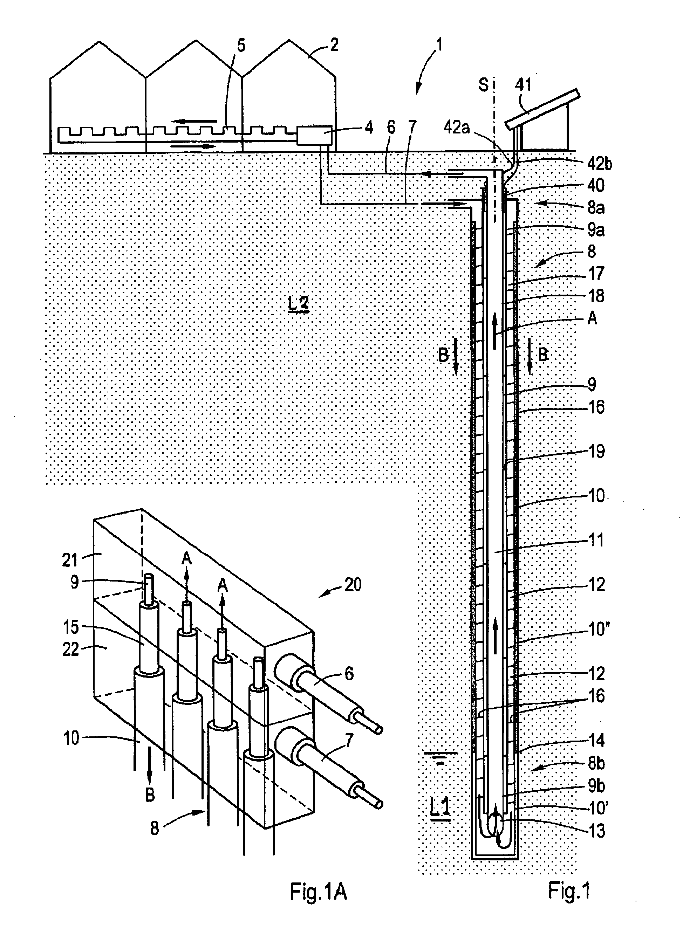

The arrangement 1 of figure 1 comprises a building and a series of heat exchangers 3, only one of which is shown, accommodated in a bottom. By means of a discharge line 6 and a supply line 7 for a fluid, such as water, the heat exchanger 3 is connected to a heat pump 4, in which thermal exchange takes place with an annular line 5 running through the building for cooling or heating it. The heat exchanger 3 comprises a tube assembly 8.

The tube assembly 8 comprises a first tube 9, comprising an inner tube, and concentrically situated around it a second or outer tube 10, according to common axis S. The tube 9 forms a channel 11 for fluid (direction A) to line 6. An annular space 12 is formed between the first tube 9 and the second tube 10. The fluid flowing therethrough (main direction B) coming from the line 7 and propelled therein by the pump 4 contacts the wall of the second tube 10 and via said wall is in thermal transfer contact with the ground, all this in accordance with the examples to be discussed below.

In the lower part 8b of the tube assembly 8 the second tube 10 comprises a steel blind end part 10', in which the transition of the fluid flow from the annular space 12 to the inside 11 of the first tube 9 takes place. For enhancing the circulation, the lower end 9b of the first tube 9 is provided with a slanted opening 13, in a manner comparable with a hypodermic syringe or a flower stem cut off at a slant. Via a connection 14 that is leakage-proof (for instance by means of edges inserted into each other that are glued together) the end part 10' connects to tube part 10", that is made of synthetic material, for instance HDPE. The tube part 10" is built up from a number of longitudinal sections/lengths, that are also attached to each other in a leakage-proof manner. The first tube 9 can be built up in parts accordingly, wherein the parts of the second tube 10 each time form a composite unity with the related parts of first tube 9. Such units can then be connected to each other into the tube assembly 8.

At the upper end 9b the first tube 9 is surrounded by a sleeve 40 of polymer foil filled with conducting material such as carbon fibres. The sleeve 40 is interrupted to form two edges where two electrodes have been arranged which via guides 42a,b are connected to both terminals of a PV panel 41. The power generated by the PV panel 41 can thus be utilised for heating the upper end of the first tube 9 and thus the liquid flowing therefrom to line 6. This provision can be made use of when the liquid has to be heated in the ground.

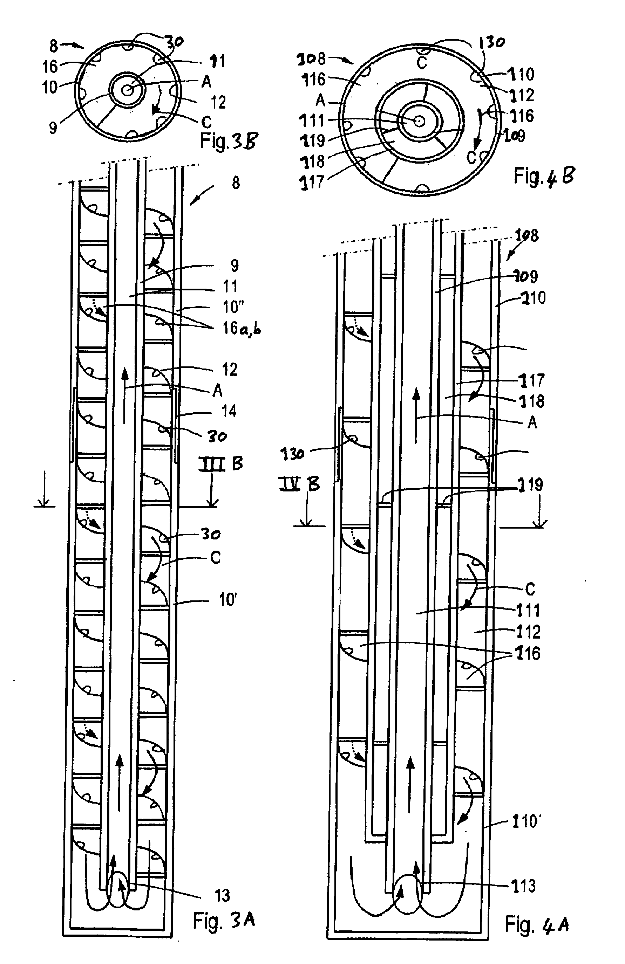

The annular space 12 is provided with two helical strips 16a,b (also see figures 3A and 3B), having an axis coinciding with those of the tubes 9, 10, in order to give the fluid flow a tangential directional component, so that the resulting flow direction becomes C and the flow path much longer than the length of the annular space 12. In that way a turbulent flow is achieved as well, as a result of which the thermal transfer between the wall of the second tube 10 and the liquid is enhanced. At their edge near the inner surface of the tube 10 the helical strips 16 are provided with axial through-holes 30, for improving the development of a turbulent flow. The strips 16 may also be provided with profilings for increasing the turbulence. The helical strips 16a,b have a mutually equal and constant pitch.

The strips 16 extend from the outer surface of the first tube 9 up to the inner surface of the outer tube 10 and ensure a coaxially retaining of both tubes, as well as increasing the bending stiffness of the tube assembly. This is advantageous for handling the tube assembly, particularly when supplying a tube assembly in the ground from a reel, in order to prevent buckling in the then curved outer tube. When the outer tube has to extend to great depths the strips are able to support the outer tube against a high soil pressure.

The strips 16 may be fixed, for instance by gluing, with the first tube 9 and/or outer tube 10, or with the aforementioned parts thereof. In case of synthetic tubes they can be integrally formed therewith of the same material.

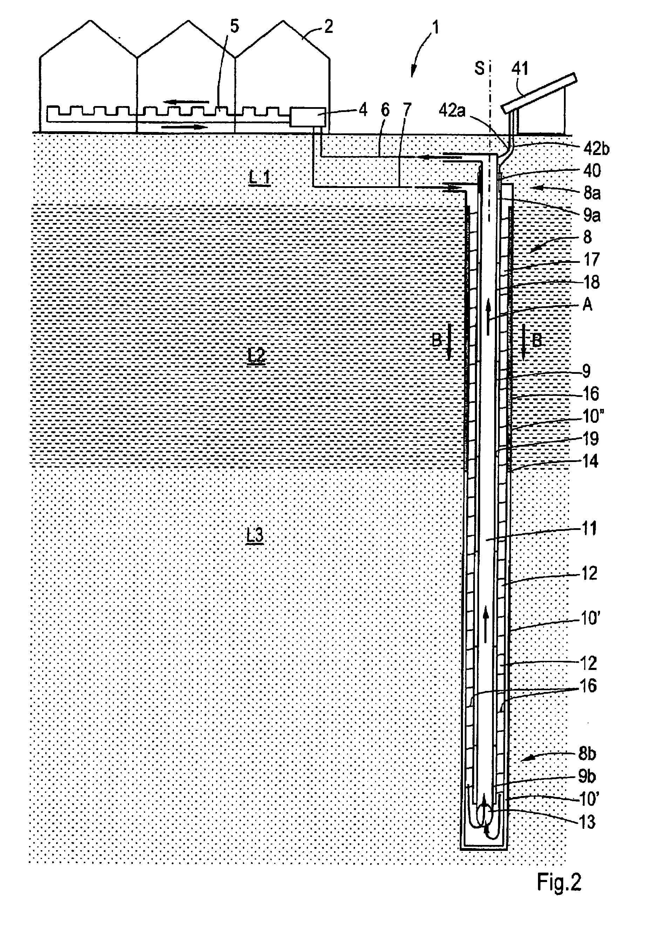

The strips are depicted in a highly schematic manner only in figure 1 (and figure 2), wherein the shown incline is only for indicating that there is question of a helical shape: in figures 1, 2, 3A and 3B the strips 16a,b, 116 are in fact flat, with radial intersecting lines with an axial longitudinal plane of cross-section. Preferably, however, in that cross-section they are slanting towards the outer tube, preferably on either side, having an opposite sign with respect to a radial plane.

As can be seen in figure 3B the cross-section of the annular space 12 is larger than the cross-section of the passage 11. In that way the rate of flow in the annular space can be low, as a result of which the length of stay is longer in the annular space 12 and the thermal transfer with the ground is improved.

In the alternative embodiment of the tube assembly shown in figures 4A and 4B parts comparable to those of figures 3A and 3B have been provided with the same reference number, increased by 100. The pitch of the strips 116 here is shown slightly enlarged, but in actual practice it will be comparable to those of strips 16a,b. The first tube apart from an inner tube 109 also comprises an intermediate tube 117, for by means of spacer partitions 119 coaxially with the inner tube 109, forming an intermediate annular space 118 filled with air. The spacer partitions have been provided at the top and at the bottom in the tube assembly, and furthermore can be placed at relatively large intermediate distances, wherein as much as possible a concentric position of the inner tube and the intermediate tube is preferred however. The intermediate tube 117 can be made of synthetic material, such as HDPE, and the distribution in axial direction of the tubes 109 and 110 follow. In addition there may also be question of length units that can be connected to each other. The air-filled intermediate annular space 118 enhances the thermal insulation between the annular space 112 and the passage 111, as a result of which the mutual thermal influencing of the opposite liquid flows is minimised. In case of a desired heating of the liquid, the liquid coming out of the upper end of the inner tube 109 can be additionally heated by hotter air rising in the intermediate annular space 118, which air may possibly have been heated by the transfer through the wall of the inner tube 109, so that loss is compensated to some degree.

In figure 1 the tube assembly extends through a bottom built up wholly from sand layers L1,L2, for instance to a depth of 15 meters. The metal (or other material that conducts heat well) end part 10' extends in water conducting sand layer L1. In order to improve thermal transfer and concentrate it more in the layer L1, the part 10" is made of synthetic material having a much lower coefficient of heat conduction, such as PVC.

In figure 2 an arrangement 101 is shown comparable to the one of figure 1, in which similar parts have the same numbers. The soil structure is different, in which the water guiding sand layer L3 extends higher and is covered by a clay layer L2, covered by a top layer L1 of sand. In this case the metal pipe part 10' extends higher, up to the bottom side of clay layer L2, through which synthetic parts 10" extend. When the tube assembly extends through several spaced apart water guiding sand layers, the outer tube in those individual sections can be made of properly conducting material, such as said metal/steel.

As shown in figure 1A several tube assemblies 8 can be connected to a distribution box 20, with a first distribution chamber 21 connected to line 6 and a second distribution chamber 22 connected to line 7. The ends of the first tubes 9 that extend through the chamber 22 are surrounded by heat insulation 15. The distribution box 20 can be buried in the bottom.

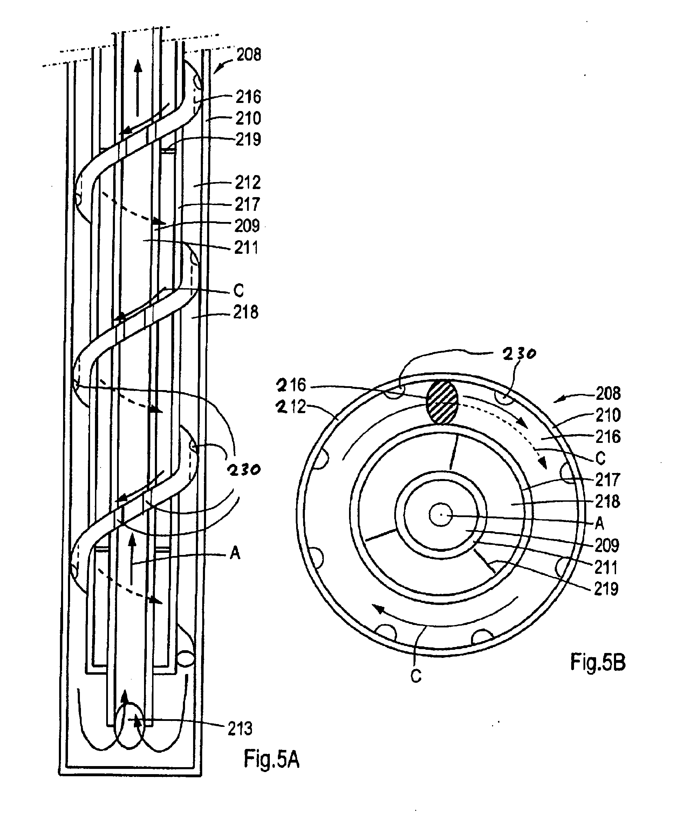

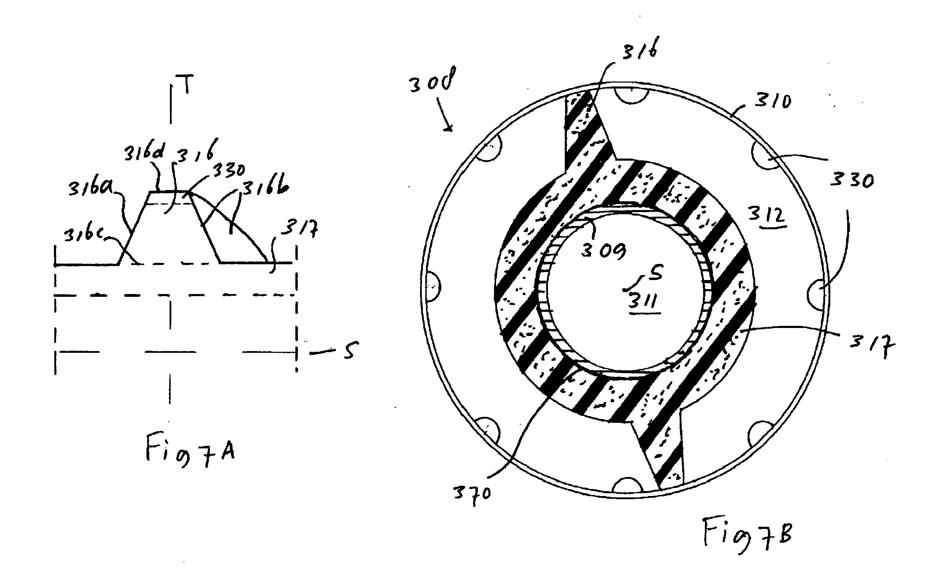

In figures 5A and 5B a part of a tube assembly 208 is shown, which largely corresponds with tube assembly 108 of figures 4A,B. The difference being that the helical strips 116 have been replaced by a thick, helical cord or wire 216, that may have been extruded along and which with the outer surface of the intermediate tube 217 and the inner surface of the outer tube 210 defines a helical flow channel (direction C) which in axial direction S is relatively broad (with respect to the intermediate distance second tube-intermediate tube). The cord or wire 116 may also have been made of a synthetic foamed material, in accordance with the ribs to be discussed in connection with the figures 7 and 8A,B.

Near the wall of the outer tube 210 the helical element 216 is provided with holes 230, via which liquid can be exchanged between consecutive flow path sections, as a result of which the turbulence is increased. Profilings on the helical element 216 may also be made use of.

A comparable arrangement of helical cord can also be used in the embodiment of figures 3A,B.

As the outer tube forms the direct connection between the annular space 12, etc. and the ground, thermal transfer is strongly enhanced and the turbulent and the extended contact time fluid-second tube wall can be profited from.

The first tube or tube defining the inner wall for the intermediate annular space may beforehand have been provided with flow directors and/or turbulence increasing means and as one unity have been inserted into an outer tube. Due to the smaller operational length/depth required, the length of the tube assembly can be limited to such an extent that assembly in the factory is possible (which ensures higher quality) and furthermore stretched transportation on a semi trailer to the project is possible, optionally with the tube assembly being completely assembled, that means including outer tube.

When the nature of the various soil layers has to be adjusted to, it may be opted for to build up the tube assembly from lengths of tube assembly that are joined together in the factory or in situ. As regards number and position of the directing means and turbulence means, the separate parts may be adjusted thereto, for instance for a quick and smooth transport through an HDPE tube part intended for a layer that absorbs heat with difficulty and for a slowed down, turbulent transport through a steel tube part intended for a water-containing sand layer.

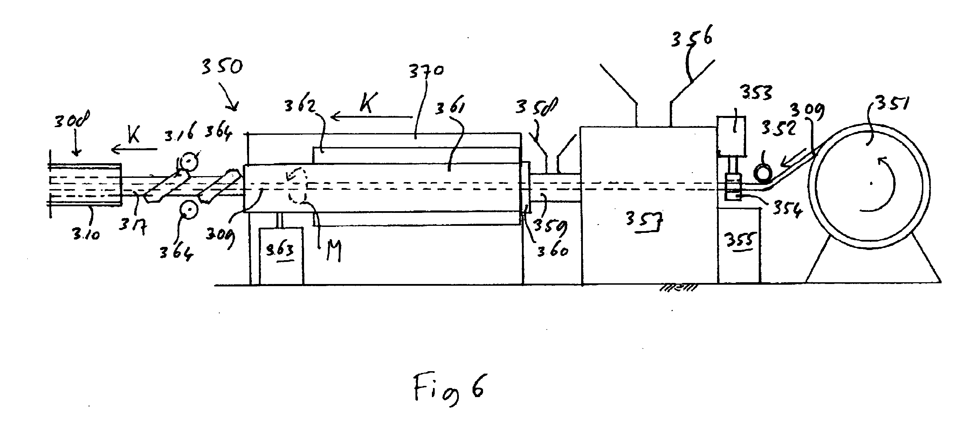

With the exemplary embodiment of an arrangement 350 shown in figure 6, an advantageous embodiment of a tube assembly according to the invention can be made. The arrangement 350 comprises a reel 351 having a stock of inner tube 309 made earlier. Downstream thereof a tension roller 352 is placed, so that the tube 309 is guided taut through the further arrangement.

A stock 353 for anti-adhesive means dispenses said means to a ring 354, with which the anti-adhesive means is applied onto the outer surface of the inner tube 309.

A funnel 306 serves as supply for a synthetic granular material to a heating unit 357, where the granular material is formed into a viscous mass. Downstream thereof there is a supply 358 for a foaming agent that is mixed with said mass in a mixer 359. Downstream thereof an extruder 370 is positioned, which is provided with a rotating profiled extrusion head/die 361 having a cooler 362 surrounding it. The extrusion head 361 is elongated, for instance having a length of over 1 m, for instance approximately 2m. The profile of the extrusion head 361 is such that an annular body is made, having a circular inner surface and a largely circular outer surface, however having two radial protrusions that are situated diametrically opposite. The extrusion head 361 is driven in rotation (M) by motor 363 and rotates at an upstream side in a bearing 360 (the downstream bearing is not shown, but will be comparable). A central control unit 355 is provided for controlling and mutually adjusting all operating parts that are shown and not shown.

Downstream of the extruder 370 a ring of milling wheels 364 is positioned. The number may for instance be eight, distributed regularly over the circumference.

When making a tube assembly as shown in figure 7B, an inner tube 309 of for instance HDPE 80 or 100 is taken from the reel and moved towards and through the extruder (K), using drive means that are not further shown, kept taut by the tensioning roller 352.

Near the ring 354 the anti-adhesive, such as silicone, is applied onto the outer surface of the inner tube 309. The inner tube 309 is transported to the extruder 370, past the heating unit 357.

At the location of the extruder 370 the mixture coming from the mixer 359 is pressed around the inner tube 309, wherein the extrusion head 361 rotates around the inner tube 309 that does not rotate. In that case a casing 317 of foamed material is laid around the inner tube 309, wherein due to continuous transport the radial protrusions form helical ribs 316. The mixture may for instance be foamed PE 80 with closed cells. The cell walls of the closed cells increase the strength and the closed cell volumes increase the insulating value. The surface of the foamed material of the casing and the rib are closed and made smooth in the extrusion process.

After the assembly of inner tube 309 including insulation casing 317 thus obtained exits the extruder 370 and the material has set sufficiently, an axially continuous recess 330 is milled in the ribs by means of milling wheels 364.

Subsequently the assembly of inner tube 309 and insulation casing 317 is inserted in a snugly fitting manner into a piece of outer tube 310 kept ready, for instance made of HDPE 125 or a steel.

When the outer tube 310 has accommodated sufficient length of inner tube 309 with insulation casing 317, the latter is cut through and a subsequent length of outer tube 310 is placed. The process may in that case take place almost continuously.

The result, tube assembly 308, can be seen in cross-section in figure 7B. By way of example the external diameter may be 59 mm, the internal diameter of the outer tube 310 56 mm, the external diameter of the ribs 316 56 mm, the external diameter of the casing 317 36 mm, the external diameter of the inner tube 309 25 mm and the internal diameter of the inner tube 309 20 mm.

The material of the ribs 316 can be slightly pressed in, as a result of which abutment against the outer tube 310 is ensured.

As shown in figure 7A the rib 316 may be trapezoidal in cross-section, having flanks 316a,b that converge towards each other and incline in an opposite manner with respect to a radial plane T perpendicular to the axis S. The outer side 316d of the trapezium is shorter than its notional inner side 316c.

When the lower end of the inner tube 309 is cut off at a slant for forming a large passage, such as in order to form said slanted opening 13, the casing 317 can first easily be cut through in situ and the lower part be removed as adhesion between the casing 310 and the inner tube 309 is prevented by the silicone.

It is noted that other ways of manufacturing are possible, such as by supplying the materials for rib and casing separately from each other, in case for instance different materials are opted for. A rotatable mandrel in the extruder can also be opted for.

The pitch of the helical ribs, or guides is selected such that a sufficiently long flow path is realised in the annular space and the pump used has sufficient capacity for the circulation of the fluid through the heat exchanger. The pitch of the ribs and the like can be smaller than the inner diameter of the outer tube, for instance approximately a half thereof, or even smaller, for instance approximately a quarter thereof, or even smaller. In the said dimensional example the pitch may for instance be 15 cm.

It is noted that in a heat exchanger arrangement in a soil the tube assembly according to the invention need not always be substantially vertically oriented. Other orientations are also possible, even a horizontal one.

The above description is included to illustrate the operation of preferred embodiments of the invention and not to limit the scope of the invention. Starting from the above explanation many variations that fall within the spirit and scope of the present invention will be evident to an expert.

## Claims

1. Tube assembly for a heat exchanger active in the ground, comprising a first tube having an axis, which tube forms a first passage for a heat exchanger fluid flowing therethrough, particularly a liquid, particularly water, and a second tube having an axis, wherein the first tube while forming an annular space, which forms a second passage for the heat exchanger fluid flowing therethrough, is accommodated in an axial-parallel manner in the second tube, preferably in a concentric manner, wherein the annular space is provided with first spacers for keeping the first tube and the second tube spaced apart from each other all round, wherein the first spacers are provided with directing means for subjecting the fluid flow in the annular space to a tangential flow directional component, wherein the directing means form a helical flow guidance surface with respect to the axis of the first tube, wherein at radial outward distance from the first tube, at or near the inner surface of the second tube turbulence increasing means for the fluid flow are arranged, preferably in the form of holes in surfaces contacting the flowing fluid.

2. Tube assembly according to claim 1, wherein the turbulence increasing means are through-holes to form passages for the flowing fluid from the upstream side of the spacer to its downstream side, wherein the holes preferably are grooves, which preferably extend parallel to the axes of both tubes, wherein the passages preferably are formed in the spacers.

3. Tube assembly according to claim 1 or 2, wherein the flow guidance surface is uninterrupted between the turbulence increasing means, in particular holes, and the first tube.

4. Tube assembly according to claim 1, 2 or 3, wherein the first tube comprises an inner casing of synthetic foamed material on which the spacers are located, wherein, preferably, the first spacers are integrally formed with the inner casing, preferably of the same material, preferably by extrusion.

5. Tube assembly according to claim 4, wherein the inner casing is arranged around an inner tube of substantially solid material, preferably by extrusion.

6. Tube assembly according to claim 5, wherein at the outer surface the inner tube is provided with a coating for lowering the adhesive force between the inner tube and the inner casing.

7. Tube assembly according to any one of the preceding claims, wherein, considered in a plane of longitudinal section containing the tube axes, the flow guidance surface descends towards the second tube, wherein, preferably, the spacers on either side define a flow guidance surface and both surfaces one to the other converge radially to the outside with an opposite sign.

8. Tube assembly according to claim 7, wherein the spacers in their cross-section have a radial inner side situated at the first tube and a radial outer side situated at the second tube, wherein the radial inner side has a larger length than the radial outer side, wherein the spacers preferably are trapezoidal in cross-section.

9. Tube assembly according to any one of the preceding claims, near one end thereof intended as upper end during use, provided with means for heating the fluid flowing out, particularly fluid flowing out through the first tube, wherein, preferably, the heating means comprise an envelope of the first tube, which can be electrically activated, wherein, preferably, the envelope comprises two electrodes, connected to an external power supply, such as a power supply based on wind or solar energy.

10. Tube assembly according to any one of the preceding claims, wherein the second tube considered in longitudinal direction of the tube has been built up from lengths of different material having different coefficients of heat conduction, which lengths are either intended or placed for thermal transfer during use between the annular space and the ground.

11. Tube, particularly for a tube assembly according to any one of the preceding claims, comprising an inner tube, of substantially solid material and a casing arranged around it of synthetic foamed material, wherein the casing at the outer side is provided with at least one helical rib of synthetic foamed material, preferably of the same material as the casing's material, wherein, preferably, the casing is arranged on the inner tube so as to fit snugly, preferably by extrusion, preferably while applying an anti-adhesive between the inner tube and the casing.

12. Tube according to claim 11, wherein the tube is accommodated in an outer tube which in circumferential sense is supported by the rib.

13. Method for manufacturing a tube assembly comprising an inner tube of substantially solid material and a casing of synthetic foamed material thereon, wherein the casing is extruded on the inner tube, wherein the casing is provided with a helical rib, wherein, preferably, the inner tube with the casing arranged thereon is introduced into an outer tube, preferably in a snugly fitting manner, wherein the rib is preferably made of synthetic foamed material, preferably of material equalling the casing's material, wherein, preferably, the casing and the rib are formed simultaneously, wherein, preferably, the rib is made having a trapezoidal cross-section, preferably having side surfaces that incline with respect to a radial surface at that location, preferably having an opposite sign.

14. Method according to claim 13, wherein through recesses, preferably grooves, extending in tube direction are made in the radial outer side of the rib.

15. Arrangement of at least one tube assembly according to any one of the claims 1-9, arranged in a bottom, wherein the tube assembly extends in the bottom, wherein the tube assembly at the end is provided with a closure, having a space in which the annular space is in fluid connection with the inside of the first tube, wherein the tube assembly at the opposite end is connected to a thermal converter while creating a cycle in which the inside of the first tube and the annular space are included, wherein, preferably, the thermal converter is formed by a heat source, particularly in an arrangement for heating the bottom.
